# EUROPEAN PATENT APPLICATION

(11) **EP 4 823 025 A1**
(43) Date of publication of application: **14.10.2026**
(21) Application number: 24906334.8
(22) Date of filing: 17.12.2024
(51) Int. Cl.: H04L 5/00

(54) **COMMUNICATION METHOD AND APPARATUS**

(30) Priority: 21.12.2023 CN 202311779519
(71) Applicant: Huawei Technologies Co., Ltd., Shenzhen, Guangdong 518129 (CN)
(72) Inventor: ZHANG, Maolin, Shenzhen, Guangdong 518129 (CN); LI, Yunbo, Shenzhen, Guangdong 518129 (CN); GUO, Yuchen, Shenzhen, Guangdong 518129 (CN)
(74) Representative: Huawei European IPR
(86) International application number: PCT/CN2024/139867
(87) International publication number: WO 2025/130853

(57) **Abstract**

Embodiments of this application disclose a communication method and apparatus. The method includes: generating a radio frame, where the radio frame includes a control field and a padding field, the padding field follows the control field, the control field indicates a first bandwidth, the first bandwidth is a bandwidth of the radio frame, and a minimum duration of the padding field is determined based on the first bandwidth; and sending the radio frame to a station device. Different minimum durations of the padding field are set for different first bandwidths, so that the station device can complete bandwidth switching within the minimum duration of the padding field, thereby ensuring successful bandwidth switching. In addition, an unnecessary switching delay generated in a dynamic capability configuration process or a dynamic power save process due to setting of a uniform delay can be avoided, thereby improving communication efficiency.

## Description

This application claims priority to Chinese Patent Application No. 202311779519.X, filed with the China National Intellectual Property Administration on December 21, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Functional requirements of wireless fidelity (wireless fidelity, Wi-Fi) in different scenarios change dynamically over time. Maintaining a consistent capability configuration that can always meet the functional requirements leads to unnecessary power consumption. To reduce the power consumption of a device, it is desirable to dynamically adjust the capability configuration based on a change in the functional requirements. During switching between different capability configuration states or between different power save modes, setting a uniform delay may cause an unnecessary switching delay, hindering timely dynamic capability configuration adjustment. When setting of a switching delay is considered, the switching delay needs to be sufficient to ensure completion of switching of the capability configuration, and the switching delay is also desired to be as small as possible, to implement short-delay dynamic capability adjustment. For example, in the IEEE 802.11be standard, in a low-power listening mode of enhanced multi-link single radio (enhanced multi-link single radio, eMLSR), a number of spatial streams (number of spatial streams, NSS) and a modulation and coding scheme (modulation and coding scheme, MCS) are reduced, a low capability configuration is used to reduce power consumption, and the NSS and the MCS are adjusted and improved when a data transmission mode is switched to. In the existing standard, bandwidth adjustment is not introduced during transition between the low-power listening mode and the data transmission mode.

### SUMMARY

Embodiments of this application provide a communication method and apparatus, to ensure successful bandwidth switching, reduce a delay, and improve communication efficiency.

According to a first aspect, an embodiment of this application provides a communication method. The method is applied to an access point device, or a chip or a circuit configured in an access point device, and includes:

generating a radio frame, where the radio frame includes a control field and a padding field, the padding field follows the control field, the control field indicates a first bandwidth, the first bandwidth is a bandwidth of the radio frame, and a minimum duration of the padding field is determined based on the first bandwidth; and sending the radio frame to a station device.

In consideration of a lock delay of a phase-locked loop during bandwidth adjustment, different minimum durations of the padding field are set for different first bandwidths, so that the station device can complete bandwidth switching within the minimum duration of the padding field, thereby ensuring successful bandwidth switching. In addition, an unnecessary switching delay generated in a dynamic capability configuration process or a dynamic power save process due to setting of a uniform delay can be avoided, thereby improving communication efficiency.

In a possible design, when the first bandwidth is less than or equal to a second bandwidth, the minimum duration of the padding field is a first duration. Alternatively, when the first bandwidth is greater than the second bandwidth, the minimum duration of the padding field is a second duration. In other words, the access point device determines, based on contention channel, a first bandwidth to be switched to, determines an actual duration of the padding field based on the first bandwidth to be switched to, and adds the padding field to the end of an initial control frame based on the actual duration of the padding field. If the first bandwidth to be switched to is less than or equal to the second bandwidth, the actual duration of the padding field may be set to be greater than or equal to the first duration. If the first bandwidth to be switched to is greater than the second bandwidth, the actual duration of the padding field may be set to be greater than or equal to the second duration. In this way, successful bandwidth switching can be ensured, a delay can be reduced, and communication efficiency can be improved.

In a possible design, when the first bandwidth is less than or equal to a second bandwidth, the minimum duration of the padding field is 0. Alternatively, when the first bandwidth is greater than the second bandwidth, the minimum duration of the padding field is a third duration. In other words, the access point device determines, based on the contention channel, the first bandwidth to be switched to, determines the actual duration of the padding field based on the first bandwidth to be switched to, and adds the padding field to the end of the initial control frame based on the actual duration of the padding field. If the bandwidth of the radio frame is less than or equal to the second bandwidth, the actual duration of the padding field may be set to be greater than or equal to 0. If the bandwidth of the radio frame is greater than the second bandwidth, the actual duration of the padding field may be set to be greater than or equal to the third duration. In this way, successful bandwidth switching can be ensured, the delay can be reduced, and the communication efficiency can be improved.

In a possible design, the minimum duration of the padding field corresponds to one or more first bandwidths. In other words, the access point device determines, based on the contention channel, the first bandwidth to be switched to, determines the actual duration of the padding field based on the first bandwidth to be switched to, and adds the padding field to the end of the initial control frame based on the actual duration of the padding field. If the first bandwidth to be switched to is 20 MHz, the actual duration of the padding field added by an AP to the end of the initial control frame is D1. The actual duration D1 is greater than or equal to a minimum duration d1. If the first bandwidth to be switched to is 40 MHz, the actual duration of the padding field added by the AP to the end of the initial control frame is D2. The actual duration D2 is greater than or equal to a minimum duration d2. If the first bandwidth to be switched to is 80 MHz, the actual duration of the padding field added by the AP to the end of the initial control frame is D3. The actual duration D3 is greater than or equal to a minimum duration d3. If the first bandwidth to be switched to is 160 MHz, the actual duration of the padding field added by the AP to the end of the initial control frame is D4. The actual duration D4 is greater than or equal to a minimum duration d4. Alternatively, one minimum duration may correspond to a plurality of first bandwidths, and a quantity of possible minimum durations is appropriately reduced. For example, if the first bandwidth to be switched to is 80 MHz or 160 MHz, the actual duration of the padding field added by the AP to the end of the initial control frame is D5. The actual duration D5 is greater than or equal to a minimum duration d5. In this way, successful bandwidth switching can be ensured, the delay can be reduced, and the communication efficiency can be improved.

In a possible design, the minimum duration of the padding field is determined based on at least two of the first bandwidth, and a number of spatial streams NSS and a modulation and coding scheme MCS that are used by the station device. In other words, the access point device determines, based on the contention channel, at least two of the first bandwidth to be switched to, and the NSS and the MCS reported by the station device to be adjusted and set to, determines the actual duration of the padding field, and adds the padding field to the end of the initial control frame based on the actual duration of the padding field. For example, if the first bandwidth to be switched to is 20 MHz, the NSS reported by an STA is N1, and the MCS reported by the STA is a mode 1, the actual duration of the padding field added by the AP to the end of the initial control frame is D1. The actual duration D1 is greater than or equal to the minimum duration d1. If the first bandwidth to be switched to is 40 MHz, the NSS reported by the STA is N2, and the MCS reported by the STA is a mode 2, the actual duration of the padding field added by the AP to the end of the initial control frame is D2. The actual duration D2 is greater than or equal to the minimum duration d2. Both adjusting a plurality of parameters (for example, the bandwidth, the NSS, and the MCS) in parallel and performing refined classification setting of the minimum duration of the padding field can help reduce the delay as much as possible and improve the communication efficiency.

In a possible design, capability information sent by the station device is received. The capability information indicates the minimum duration of the padding field. The access point device may set different minimum durations of the padding field for different first bandwidths based on the capability information reported by the station device. In this way, successful bandwidth switching can be ensured, the delay can be reduced, and the communication efficiency can be improved.

In a possible design, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field. The access point device may set different minimum durations of the padding field for different parameter values based on the mapping relationship. In this way, successful switching between the parameters can be ensured, the delay can be reduced, and the communication efficiency can be improved.

In a possible design, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

The access point device sets different minimum durations of the padding field for different parameter values based on the minimum durations of the padding field in different cases. In this way, successful switching between the parameters can be ensured, the delay can be reduced, and the communication efficiency can be improved.

In a possible design, the second bandwidth is an initial bandwidth used by the station device.

In a possible design, the first bandwidth is a bandwidth determined based on channel contention.

In a possible design, the radio frame further includes a frame check field. The frame check field follows the padding field, or the frame check field is located before the padding field and after the control field.

In a possible design, the radio frame is an initial frame or an initial control frame.

According to a second aspect, an embodiment of this application provides a communication method. The method is applied to a station device, or a chip or a circuit configured in a station device, and includes:
receiving a radio frame send by an access point device, where the radio frame includes a control field and a padding field, the padding field follows the control field, the control field indicates a first bandwidth, the first bandwidth is a bandwidth of the radio frame, and a minimum duration of the padding field is determined based on the first bandwidth; and switching to the first bandwidth based on the radio frame.

In consideration of a lock delay of a phase-locked loop during bandwidth adjustment, different minimum durations of the padding field are set for different first bandwidths, so that the station device can complete bandwidth switching within the minimum duration of the padding field, thereby ensuring successful bandwidth switching. In addition, an unnecessary switching delay generated in a dynamic capability configuration process or a dynamic power save process due to setting of a uniform delay can be avoided, thereby improving communication efficiency.

In a possible design, when the first bandwidth is less than or equal to a second bandwidth, the minimum duration of the padding field is a first duration. Alternatively, when the first bandwidth is greater than the second bandwidth, the minimum duration of the padding field is a second duration. In other words, the access point device determines, based on contention channel, a first bandwidth to be switched to, determines an actual duration of the padding field based on the first bandwidth to be switched to, and adds the padding field to the end of an initial control frame based on the actual duration of the padding field. If the first bandwidth to be switched to is less than or equal to the second bandwidth, the actual duration of the padding field may be set to be greater than or equal to the first duration. If the first bandwidth to be switched to is greater than the second bandwidth, the actual duration of the padding field may be set to be greater than or equal to the second duration. In this way, successful bandwidth switching can be ensured, a delay can be reduced, and communication efficiency can be improved.

In a possible design, when the first bandwidth is less than or equal to a second bandwidth, the minimum duration of the padding field is 0. Alternatively, when the first bandwidth is greater than the second bandwidth, the minimum duration of the padding field is a third duration. In other words, the access point device determines, based on the contention channel, the first bandwidth to be switched to, determines the actual duration of the padding field based on the first bandwidth to be switched to, and adds the padding field to the end of the initial control frame based on the actual duration of the padding field. If the bandwidth of the radio frame is less than or equal to the second bandwidth, the actual duration of the padding field may be set to be greater than or equal to 0. If the bandwidth of the radio frame is greater than the second bandwidth, the actual duration of the padding field may be set to be greater than or equal to the third duration. In this way, successful bandwidth switching can be ensured, the delay can be reduced, and the communication efficiency can be improved.

In a possible design, the minimum duration of the padding field corresponds to one or more first bandwidths. In other words, the access point device determines, based on the contention channel, the first bandwidth to be switched to, determines the actual duration of the padding field based on the first bandwidth to be switched to, and adds the padding field to the end of the initial control frame based on the actual duration of the padding field. If the first bandwidth to be switched to is 20 MHz, the actual duration of the padding field added by an AP to the end of the initial control frame is D1. The actual duration D1 is greater than or equal to a minimum duration d1. If the first bandwidth to be switched to is 40 MHz, the actual duration of the padding field added by the AP to the end of the initial control frame is D2. The actual duration D2 is greater than or equal to a minimum duration d2. If the first bandwidth to be switched to is 80 MHz, the actual duration of the padding field added by the AP to the end of the initial control frame is D3. The actual duration D3 is greater than or equal to a minimum duration d3. If the first bandwidth to be switched to is 160 MHz, the actual duration of the padding field added by the AP to the end of the initial control frame is D4. The actual duration D4 is greater than or equal to a minimum duration d4. Alternatively, one minimum duration corresponds to a plurality of first bandwidths, and a quantity of possible minimum durations is appropriately reduced. For example, if the first bandwidth to be switched to is 80 MHz or 160 MHz, the actual duration of the padding field added by the AP to the end of the initial control frame is D5. The actual duration D5 is greater than or equal to a minimum duration d5. In this way, successful bandwidth switching can be ensured, the delay can be reduced, and the communication efficiency can be improved.

In a possible design, the minimum duration of the padding field is determined based on at least two of the first bandwidth, and a number of spatial streams NSS and a modulation and coding scheme MCS that are used by the station device. In other words, the access point device determines, based on the contention channel, at least two of the first bandwidth to be switched to, and the NSS and the MCS reported by the station device to be adjusted and set to, determines the actual duration of the padding field, and adds the padding field to the end of the initial control frame based on the actual duration of the padding field. For example, if the first bandwidth to be switched to is 20 MHz, the NSS reported by an STA is N1, and the MCS reported by the STA is a mode 1, the actual duration of the padding field added by the AP to the end of the initial control frame is D1. The actual duration D1 is greater than or equal to the minimum duration d1. If the first bandwidth to be switched to is 40 MHz, the NSS reported by the STA is N2, and the MCS reported by the STA is a mode 2, the actual duration of the padding field added by the AP to the end of the initial control frame is D2. The actual duration D2 is greater than or equal to the minimum duration d2. Both adjusting a plurality of parameters (for example, the bandwidth, the NSS, and the MCS) in parallel and performing refined classification setting of the minimum duration of the padding field can help reduce the delay as much as possible and improve the communication efficiency.

In a possible design, capability information is sent to the access point device. The capability information indicates the minimum duration of the padding field. This enables the access point device to set different minimum durations of the padding field for different first bandwidths based on the capability information reported by the station device. In this way, successful bandwidth switching can be ensured, the delay can be reduced, and the communication efficiency can be improved.

In a possible design, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field. This enables the access point device to set different minimum durations of the padding field for different parameter values based on the mapping relationship. In this way, successful switching between the parameters can be ensured, the delay can be reduced, and the communication efficiency can be improved.

In a possible design, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

The minimum durations of the padding field in different cases are reported, so that the access point device can set different minimum durations of the padding field for different parameter values. In this way, successful switching between the parameters can be ensured, the delay can be reduced, and the communication efficiency can be improved.

In a possible design, the second bandwidth is an initial bandwidth used by the station device.

In a possible design, the first bandwidth is a bandwidth determined based on channel contention.

In a possible design, the first bandwidth is switched to within the minimum duration of the padding field. Bandwidth switching is completed within the minimum duration of the padding field, so that successful bandwidth switching can be ensured and the delay can be reduced.

In a possible design, the radio frame further includes a frame check field. The frame check field follows the padding field, or the frame check field is located before the padding field and after the control field.

In a possible design, the radio frame is an initial frame or an initial control frame.

According to a third aspect, an embodiment of this application provides a communication apparatus. The apparatus includes:
a processing module, configured to generate a radio frame, where the radio frame includes a control field and a padding field, the padding field follows the control field, the control field indicates a first bandwidth, the first bandwidth is a bandwidth of the radio frame, and a minimum duration of the padding field is determined based on the first bandwidth; and
a sending module, configured to send the radio frame to a station device.

In a possible design, when the first bandwidth is less than or equal to a second bandwidth, the minimum duration of the padding field is a first duration. Alternatively, when the first bandwidth is greater than the second bandwidth, the minimum duration of the padding field is a second duration.

In a possible design, when the first bandwidth is less than or equal to a second bandwidth, the minimum duration of the padding field is 0. Alternatively, when the first bandwidth is greater than the second bandwidth, the minimum duration of the padding field is a third duration.

In a possible design, the minimum duration of the padding field corresponds to one or more first bandwidths.

In a possible design, the minimum duration of the padding field is determined based on at least two of the first bandwidth, and a number of spatial streams NSS and a modulation and coding scheme MCS that are used by the station device.

In a possible design, the apparatus further includes:
a receiving module, configured to receive capability information sent by the station device. The capability information indicates the minimum duration of the padding field.

In a possible design, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

In a possible design, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

In a possible design, the second bandwidth is an initial bandwidth used by the station device.

In a possible design, the first bandwidth is a bandwidth determined based on channel contention.

In a possible design, the radio frame further includes a frame check field. The frame check field follows the padding field, or the frame check field is located before the padding field and after the control field.

In a possible design, the radio frame is an initial frame or an initial control frame.

For operations performed by the communication apparatus and beneficial effects thereof, refer to the method according to the first aspect and beneficial effects thereof. Repeated parts are not described again.

According to a fourth aspect, an embodiment of this application provides a communication apparatus. The apparatus includes:
a receiving module, configured to receive a radio frame send by an access point device, where the radio frame includes a control field and a padding field, the padding field follows the control field, the control field indicates a first bandwidth, the first bandwidth is a bandwidth of the radio frame, and a minimum duration of the padding field is determined based on the first bandwidth; and
a processing module, configured to switch to the first bandwidth based on the radio frame.

In a possible design, when the first bandwidth is less than or equal to a second bandwidth, the minimum duration of the padding field is a first duration. Alternatively, when the first bandwidth is greater than the second bandwidth, the minimum duration of the padding field is a second duration.

In a possible design, when the first bandwidth is less than or equal to a second bandwidth, the minimum duration of the padding field is 0. Alternatively, when the first bandwidth is greater than the second bandwidth, the minimum duration of the padding field is a third duration.

In a possible design, the minimum duration of the padding field corresponds to one or more first bandwidths.

In a possible design, the minimum duration of the padding field is determined based on at least two of the first bandwidth, and a number of spatial streams NSS and a modulation and coding scheme MCS that are used by a station device.

In a possible design, the apparatus further includes:
a sending module, configured to send capability information to the access point device. The capability information indicates the minimum duration of the padding field.

In a possible design, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

In a possible design, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

In a possible design, the second bandwidth is an initial bandwidth used by the station device.

In a possible design, the first bandwidth is a bandwidth determined based on channel contention.

In a possible design, the processing module is further configured to switch to the first bandwidth within the minimum duration of the padding field.

In a possible design, the radio frame further includes a frame check field. The frame check field follows the padding field, or the frame check field is located before the padding field and after the control field.

In a possible design, the radio frame is an initial frame or an initial control frame.

For operations performed by the communication apparatus and beneficial effects thereof, refer to the method according to the second aspect and beneficial effects thereof. Repeated parts are not described again.

According to a fifth aspect, this application provides a communication apparatus. The communication apparatus includes a processor and a memory. The memory is configured to store a computer program. The processor is configured to execute the computer program stored in the memory, to enable the communication apparatus to perform the method according to any one of the first aspect or the possible designs.

According to a sixth aspect, this application provides a communication apparatus. The communication apparatus includes a processor and a memory. The memory is configured to store a computer program. The processor is configured to execute the computer program stored in the memory, to enable the communication apparatus to perform the method according to any one of the second aspect or the possible designs.

According to a seventh aspect, this application provides a communication apparatus. The apparatus may be an access point device, an apparatus in an access point device, or an apparatus that can be used together with an access point device. The communication apparatus may alternatively be a chip system. The communication apparatus may perform the method according to the first aspect. A function of the communication apparatus may be implemented by using hardware, or may be implemented by executing corresponding software by hardware. The hardware or the software includes one or more modules corresponding to the function. The module may be software and/or hardware. For operations performed by the communication apparatus and beneficial effects thereof, refer to the method according to the first aspect and beneficial effects thereof. Repeated parts are not described again.

According to an eighth aspect, this application provides a communication apparatus. The apparatus may be a station device, an apparatus in a station device, or an apparatus that can be used together with a station device. The communication apparatus may alternatively be a chip system. The communication apparatus may perform the method according to the second aspect. A function of the communication apparatus may be implemented by using hardware, or may be implemented by executing corresponding software by hardware. The hardware or the software includes one or more modules corresponding to the function. The module may be software and/or hardware. For operations performed by the communication apparatus and beneficial effects thereof, refer to the method according to the second aspect and beneficial effects thereof. Repeated parts are not described again.

According to a ninth aspect, this application provides a computer-readable storage medium. The computer-readable storage medium is configured to store a computer program. When the computer program is executed, the method according to any one of the first aspect and the second aspect is implemented.

According to a tenth aspect, this application provides a computer program product including a computer program. When the computer program is executed, the method according to the first aspect or the second aspect is implemented.

According to an eleventh aspect, an embodiment of this application provides a communication system. The communication system includes at least one station device and at least one access point device. The access point device is configured to perform the steps in the first aspect, and the station device is configured to perform the steps in the second aspect.

According to a twelfth aspect, a chip is provided. The chip includes a processor and a communication interface. The communication interface is configured to communicate with an external component or an internal component, and the processor is configured to implement the method according to the foregoing aspects.

In a possible design, the chip may further include a memory. The memory stores a computer program or instructions. The processor is configured to execute the computer program or the instructions stored in the memory, or programs or instructions derived from other sources. When the computer program or the instructions are executed, the processor is configured to implement the method according to the foregoing aspects.

In a possible design, the chip may be integrated into a station device or an access point device.

### BRIEF DESCRIPTION OF DRAWINGS

FIG. 1 is a diagram of a structure of a communication system according to an embodiment of this application;
FIG. 2 is a diagram of bandwidth switching;
FIG. 3 is a schematic flowchart of a communication method according to an embodiment of this application;
FIG. 4A is a diagram of bandwidth switching;
FIG. 4B is a diagram of another bandwidth switching;
FIG. 5A is a diagram of bandwidth switching;
FIG. 5B is a diagram of another bandwidth switching;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of an access point device according to an embodiment of this application; and
FIG. 9 is a diagram of a structure of a station device according to an embodiment of this application.

### DESCRIPTION OF EMBODIMENTS

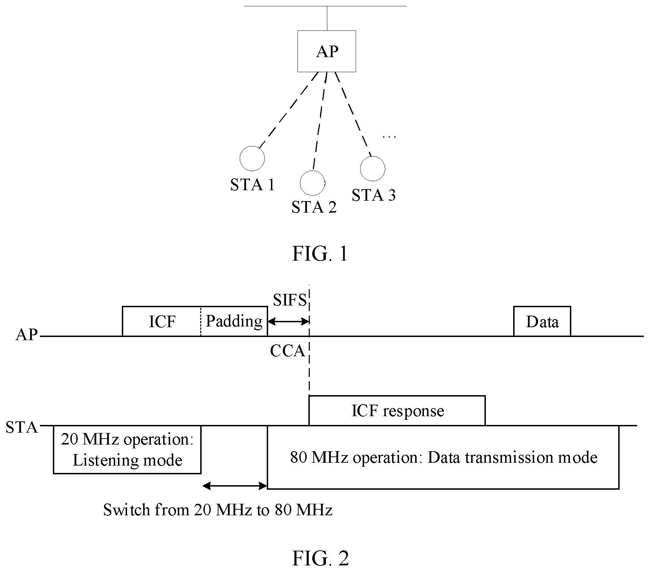

FIG. 1 is a diagram of a structure of a communication system according to an embodiment of this application. The communication system may be a wireless local area network. The wireless local area network includes at least one access point (access point, AP) and at least one station (station, STA). The AP is a network element that provides a service to the station, and may be referred to as an access point station (AP Station), for example, an access point supporting the 802.11 series of protocols. The station STA may be a station supporting the 802.11 series of protocols, and may be referred to as a non-access point station (non-AP STA), for example, an extremely high throughput (extremely high throughput, EHT) station. The station STA may alternatively be a station supporting IEEE 802.11be, or a station supporting IEEE 802.11bn (Wi-Fi 8).

In this communication system, one AP may be associated with a plurality of STAs, and one AP may perform data transmission with a plurality of STAs. For example, the AP in FIG. 1 may transmit uplink data or downlink data with three or more STAs. The communication system may be used in communication between APs, and may be further used in communication between an AP and an STA and communication between STAs.

Currently, an Institute of Electrical and Electronics Engineers (institute of electrical and electronics engineers, IEEE) 802.11 next-generation Wi-Fi protocol device can support increasing a peak throughput in manners such as using a plurality of streams, a plurality of bands (for example, 2.4 GHz, 5 GHz, and 6 GHz bands), and through cooperation between a plurality of channels on a same band, to reduce a service transmission delay. In other words, the STA in the communication system shown in FIG. 1 may transmit uplink or downlink data in a multi-band or multi-channel manner. In other words, the STA may transmit uplink or downlink data through a plurality of links. The STA that transmits uplink or downlink data through a plurality of links may be referred to as a multi-link STA. An IEEE 802.11 standard station that simultaneously supports a plurality of links may be referred to as a multi-link device (multi-link device, MLD), and an internal entity responsible for any link in the MLD is referred to as an STA. An IEEE 802.11 standard station that supports only one link or an IEEE 802.11 standard station that works on only one link is referred to as a single link device (single link device, SLD). Because only one link is supported, the IEEE 802.11 standard station may also be referred to as a single link (single link, SL) STA. If the MLD is an AP, the MLD may be further referred to as a multi-link (multi-link, ML) AP. If the MLD is a non-AP STA, the MLD may be further referred to as an ML non-AP STA.

For example, the STA in the communication system shown in FIG. 1 may be a multi-link STA. The AP may also be a multi-link AP, that is, an AP capable of receiving uplink data or sending downlink data through a plurality of links. The multi-link STA may include one or more STAs, and the one or more STAs work on a plurality of links. The multi-link AP includes one or more APs, and the one or more APs work on a plurality of links.

For the foregoing communication system, in a communication process between the AP and the STA, when setting of a switching delay is considered, the switching delay needs to be sufficient to ensure completion of switching of a capability configuration, and the switching delay is also desired to be as small as possible, to implement short-delay dynamic capability adjustment. For example, in the IEEE 802.11be standard, in a low-power listening mode of enhanced multi-link single radio (enhanced multi-link single radio, eMLSR), a number of spatial streams (number of spatial streams, NSS) and a modulation and coding scheme (modulation and coding scheme, MCS) are reduced, a low capability configuration is used to reduce power consumption, and the NSS and the MCS are adjusted and improved when a data transmission mode is switched to.

In the IEEE 802.11be (Wi-Fi 7) standard, bandwidth adjustment is not introduced during transition between the low-power listening mode and the data transmission mode. No special delay is designed for bandwidth adjustment, and completion of clock switching is not allowed. Therefore, bandwidth adjustment is not supported. To introduce bandwidth adjustment, there is a need to accommodate a delay required for STA bandwidth adjustment. The latest solution is to add a padding (padding) field to the end of an initial control frame (initial control frame, ICF) sent by the AP. FIG. 2 is a diagram of bandwidth switching. A duration of a padding field is used to cover a time for bandwidth switching of an STA, and the STA completes bandwidth switching within the duration of the padding field. Then, the STA performs clear channel assessment (clear channel assessment, CCA) during a short interframe space (short interframe space, SIFS), and sends an ICF response to an AP when a channel is idle. After receiving the ICF response, the AP may send data to the STA. An initial control frame may be a multi user-request to send (multi user-request to send, MU-RTS) frame, and the ICF response may be a clear to send (CTS) frame.

However, the technical solution has the following problems: First, a switching delay is not adjusted based on an actual bandwidth to be switched to. Because an excessively long switching delay is not needed when a bandwidth is unchanged, an unnecessary switching delay is generated during a dynamic capability configuration process or a dynamic power save process due to setting of a uniform delay. Second, the bandwidth depends on channel contention and is uncertain. Therefore, there may be a case in which an actual bandwidth obtained through contention is consistent with an initial bandwidth, but this case does not occur during adjustment of two parameters, namely an NSS and an MCS. How to set different switching delays based on an actual condition is an urgent problem to be resolved.

To resolve the foregoing technical problems, embodiments of this application provide the following solutions.

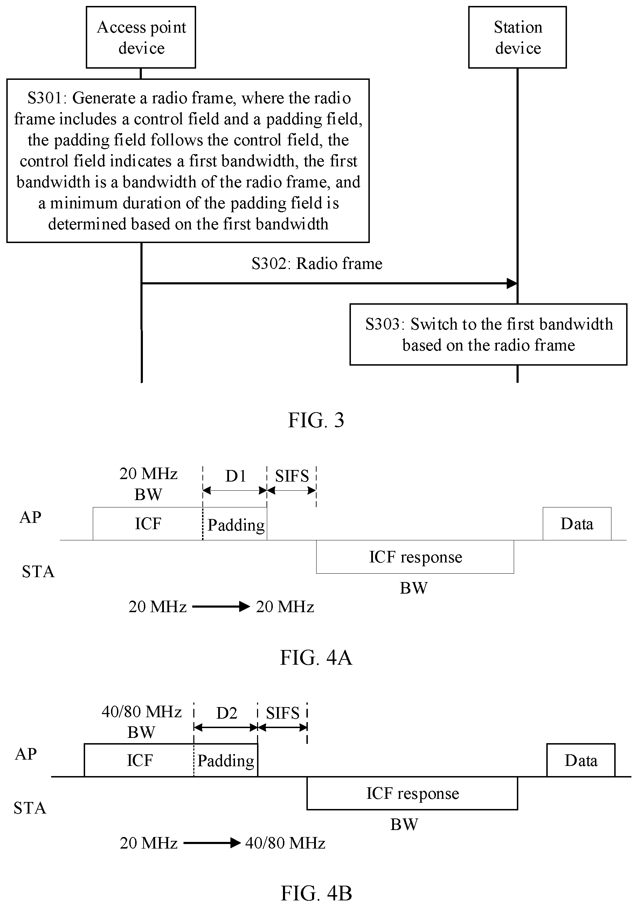

FIG. 3 is a schematic flowchart of a communication method according to an embodiment of this application. The method mainly includes the following steps.

S301: An access point device generates a radio frame, where the radio frame includes a control field and a padding field, the padding field follows the control field, the control field indicates a first bandwidth, the first bandwidth is a bandwidth of the radio frame, and a minimum duration of the padding field is determined based on the first bandwidth.

Specifically, the access point device may add the padding field to the end of the control field, and use an actual duration of the padding field to cover a time required for a phase-locked loop to generate a clock and wait for the clock to stabilize, so that a station device can complete bandwidth switching within the actual duration of the padding field. The padding field may be invalid data, and the actual duration of the padding field is greater than or equal to the minimum duration of the padding field. In an optimal case, the actual duration of the padding field may be set to the minimum duration of the padding field, to reduce a delay.

Optionally, the radio frame may further include a frame check field. The frame check field follows the padding field, or the frame check field is located before the padding field and after the control field. The frame check field is used to check the control field, and the frame check field may be a frame check sequence (frame check sequence, FCS).

The radio frame may be an initial frame or an initial control frame.

Optionally, the access point device may receive capability information sent by the station device. The capability information indicates the minimum duration of the padding field. The access point device may determine the minimum duration of the padding field based on the capability information reported by the station device, and generate the radio frame. Optionally, when the station device establishes an association with the access point device, a dynamic power save mode is enabled, or an update is needed in the dynamic power save mode, the station device reports the capability information to the access point device. Optionally, the station device may report the capability information via an association request frame (association request frame), a reassociation request frame (reassociation request frame), a dynamic power save mode enabling frame, a dynamic power save mode notification frame, or another frame. Reported content may be included in a basic dynamic power save element (element) in the (re)association request frame, a dynamic power save parameter field in the dynamic power save mode enabling frame, a dynamic power save parameter update field in the dynamic power save mode notification frame, or other fields in these frames or in other frames.

Specifically, the capability information may include a first duration and a second duration. The first duration is the minimum duration of the padding field used when the first bandwidth is less than or equal to a second bandwidth. The second duration is the minimum duration of the padding field used when the first bandwidth is greater than the second bandwidth. Alternatively, the capability information may include a third duration. The third duration is the minimum duration of the padding field used when the first bandwidth is greater than the second bandwidth. Alternatively, the capability information may include a plurality of minimum durations of the padding field. One minimum duration corresponds to one or more first bandwidths. Alternatively, the capability information may include a plurality of minimum durations of the padding field. One minimum duration corresponds to at least two of the first bandwidth, and an NSS and an MCS that are used by the station device. The second bandwidth may be a specific value, or the second bandwidth may be an initial bandwidth used by the station device.

The capability information includes at least one of the following information:

First type of mapping relationship: A mapping relationship between a magnitude relationship between the first bandwidth and the second bandwidth and the minimum duration of the padding field. For example, when the first bandwidth is less than or equal to the second bandwidth, the minimum duration of the padding field is d1. When the first bandwidth is greater than the second bandwidth, the minimum duration of the padding field is d2. d1 is less than d2. Alternatively, when the first bandwidth is less than or equal to the second bandwidth, the minimum duration of the padding field is 0. When the first bandwidth is greater than the second bandwidth, the minimum duration of the padding field is d3. In this way, when an AP sends an ICF, a corresponding minimum duration is selected based on the mapping relationship to add the padding field to the end of the control field.

Second type of mapping relationship: A mapping relationship between the first bandwidth and the minimum duration of the padding field. For example, when the first bandwidth is 20 MHz, the minimum duration of the padding field is the first duration d1. When the first bandwidth is 40 MHz, the minimum duration of the padding field is the second duration d2. When the first bandwidth is 80 MHz, the minimum duration of the padding field is the third duration d3. When the first bandwidth is 160 MHz, the minimum duration of the padding field is a fourth duration d4. Certainly, a plurality of first bandwidths may also correspond to one minimum duration. For example, when the first bandwidth is 80 MHz or 160 MHz, the minimum duration of the padding field is a fifth duration d5. In this way, when the AP sends the ICF, a corresponding minimum duration is selected based on the mapping relationship to add the padding field to the end of the control field.

Third type of mapping relationship: A mapping relationship between at least two of the first bandwidth, and the NSS and the MCS that are used by the station device, and the minimum duration of the padding field. Specifically, different values of a same parameter combination (the first bandwidth, the NSS, and the MCS) correspond to different minimum durations of the padding field. For example, when the first bandwidth is 20 MHz, the NSS is N1, and the MCS is a mode 1, the minimum duration of the padding field is the first duration d1. When the first bandwidth is 40 MHz, the NSS is N2, and the MCS is a mode 2, the minimum duration of the padding field is the second duration d2. When the first bandwidth is 80 MHz, the NSS is N3, and the MCS is a mode 3, the minimum duration of the padding field is the third duration d3. When the first bandwidth is 160 MHz, the NSS is N4, and the MCS is a mode 4, the minimum duration of the padding field is the fourth duration d4. Alternatively, different values of a same parameter combination (the first bandwidth, the NSS, and the MCS) correspond to same minimum durations of the padding field. For example, when the first bandwidth is 80 MHz, the NSS is N5, and the MCS is a mode 5, and when the first bandwidth is 160 MHz, the NSS is N6, and the MCS is a mode 6, the minimum duration of the padding field is the fifth duration d5. In this way, when the AP sends the ICF, a corresponding minimum duration is selected based on the mapping relationship to add the padding field to the end of the control field.

It should be noted that a case in which any two or more of a plurality of parameters are adjusted falls within the protection scope of this application. For example, the minimum duration of the padding field is set based on a combination of two parameters, namely the first bandwidth and the MCS. Alternatively, the minimum duration of the padding field is set based on a combination of two parameters, namely the first bandwidth and the NSS. Alternatively, the minimum duration of the padding field is set based on a combination of two parameters, namely the NSS and the MCS.

The control field in the radio frame indicates the first bandwidth, and the first bandwidth is the bandwidth of the radio frame. In other words, the first bandwidth is a bandwidth used by the access point device to send the radio frame. Further, the first bandwidth is a bandwidth that is to be switched to and that is determined by the access point device based on contention channel. The access point device may determine the minimum duration of the padding field based on the mapping relationship and the first bandwidth. Specifically, the minimum duration of the padding field may be determined in the following several manners.

In an implementation, when the first bandwidth is less than or equal to the second bandwidth, the minimum duration of the padding field is the first duration. Alternatively, when the first bandwidth is greater than the second bandwidth, the minimum duration of the padding field is the second duration. The first duration is less than the second duration. In other words, the access point device may determine, based on the channel contention, the first bandwidth to be switched to, search the first type of mapping relationship based on the first bandwidth to be switched to, to determine the actual duration of the padding field, and add the padding field to the end of the initial control frame based on the actual duration of the padding field. If the first bandwidth to be switched to is less than or equal to the second bandwidth, the actual duration of the padding field may be set to be greater than or equal to the first duration. If the first bandwidth to be switched to is greater than the second bandwidth, the actual duration of the padding field may be set to be greater than or equal to the second duration.

FIG. 4A is a diagram of bandwidth switching. When the STA is in a low-power listening mode, an initial bandwidth of 20 MHz is used. If the first bandwidth to be switched to is 20 MHz, the first bandwidth is equal to the initial bandwidth, and the actual duration of the padding field added by the access point device to the end of the initial control frame is D1. The actual duration D1 is greater than or equal to the first duration d1. After the STA receives the control field from the AP, because the first bandwidth is equal to the initial bandwidth, there is no need for bandwidth switching.

FIG. 4B is a diagram of another bandwidth switching. When the STA is in the low-power listening mode, the initial bandwidth of 20 MHz is used. If the first bandwidth to be switched to is 40 MHz or 80 MHz, the first bandwidth is greater than the initial bandwidth, and the actual duration of the padding field added by the AP to the end of the initial control frame is D2. The actual duration D2 is greater than or equal to the second duration d2. After the STA receives the control field from the AP, the STA starts to perform bandwidth switching within the actual duration D2 of the padding field based on the first bandwidth indicated by the control field. After completing bandwidth switching, the STA performs the CCA and sends the ICF response.

In another implementation, when the first bandwidth is less than or equal to the second bandwidth, the minimum duration of the padding field is 0. Alternatively, when the first bandwidth is greater than the second bandwidth, the minimum duration of the padding field is the third duration. In other words, the access point device determines, based on the channel contention, the first bandwidth to be switched to, searches the first type of mapping relationship based on the first bandwidth to be switched to, to determine the actual duration of the padding field, and adds the padding field to the end of the initial control frame based on the actual duration of the padding field. If the bandwidth of the radio frame is less than or equal to the second bandwidth, the actual duration of the padding field may be set to be greater than or equal to 0. If the bandwidth of the radio frame is greater than the second bandwidth, the actual duration of the padding field may be set to be greater than or equal to the third duration.

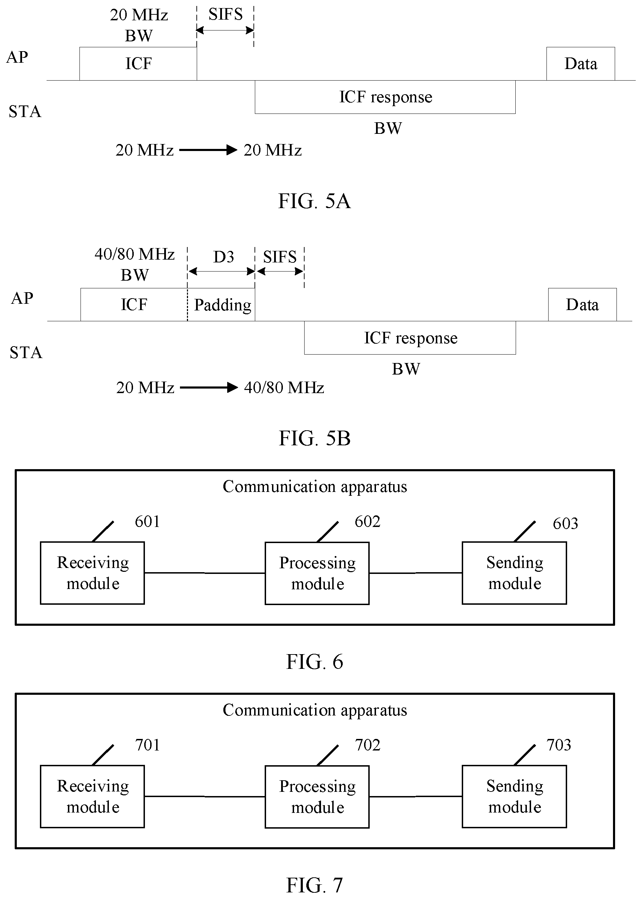

FIG. 5A is a diagram of bandwidth switching. When the STA is in the low-power listening mode, the initial bandwidth of 20 MHz is used. If the first bandwidth to be switched to is 20 MHz, the first bandwidth is equal to the initial bandwidth, and the actual duration of the padding field added by the AP to the end of the initial control frame is 0. After the STA receives the control field from the AP, because the first bandwidth is equal to the initial bandwidth, there is no need for bandwidth switching.

FIG. 5B is a diagram of another bandwidth switching. When the STA is in the low-power listening mode, the initial bandwidth of 20 MHz is used. If the first bandwidth to be switched to is 40 MHz or 80 MHz, the first bandwidth is greater than the initial bandwidth, and the actual duration of the padding field added by the AP to the end of the initial control frame is D3. The actual duration D3 is greater than or equal to the third duration d3. After the STA receives the control field from the AP, the STA starts to perform bandwidth switching within the actual duration D3 of the padding field based on the first bandwidth indicated by the control field. After completing bandwidth switching, the STA performs the CCA and sends the ICF response.

In another implementation, the minimum duration of the padding field corresponds to one or more first bandwidths. In other words, the access point device determines, based on the channel contention, the first bandwidth to be switched to, search the second type of mapping relationship based on the first bandwidth to be switched to, to determine the actual duration of the padding field, and adds the padding field to the end of the initial control frame based on the actual duration of the padding field. If the first bandwidth to be switched to is 20 MHz, the actual duration of the padding field added by an AP to the end of the initial control frame is D1. The actual duration D1 is greater than or equal to the first duration d1. If the first bandwidth to be switched to is 40 MHz, the actual duration of the padding field added by the AP to the end of the initial control frame is D2. The actual duration D2 is greater than or equal to the second duration d2. If the first bandwidth to be switched to is 80 MHz, the actual duration of the padding field added by the AP to the end of the initial control frame is D3. The actual duration D3 is greater than or equal to the third duration d3. If the first bandwidth to be switched to is 160 MHz, the actual duration of the padding field added by the AP to the end of the initial control frame is D4. The actual duration D4 is greater than or equal to the fourth duration d4. Alternatively, if the first bandwidth to be switched to is 80 MHz or 160 MHz, the actual duration of the padding field added by the AP to the end of the initial control frame is D5. The actual duration D5 is greater than or equal to the minimum duration d5.

In another implementation, the minimum duration of the padding field is determined based on at least two of the first bandwidth, and the NSS and the MCS that are used by the station device. The station device may report, via an operating mode notification frame (operating mode notification frame) or a similar frame in the existing standard (802.11be), the NSS and/or MCS to be adjusted and set to. In other words, the access point device may determine, based on the contention channel, at least two of the first bandwidth to be switched to, and the NSS and the MCS that are reported by the station device, search the third type of mapping relationship, to determine the actual duration of the padding field, and add the padding field to the end of the initial control frame based on the actual duration of the padding field. For example, if the first bandwidth to be switched to is 20 MHz, the NSS reported by the STA is N1, and the MCS reported by the STA is a mode 1, the actual duration of the padding field added by the AP to the end of the initial control frame is D1. The actual duration D1 is greater than or equal to the first duration d1. If the first bandwidth to be switched to is 40 MHz, the NSS reported by the STA is N2, and the MCS reported by the STA is a mode 2, the actual duration of the padding field added by the AP to the end of the initial control frame is D2. The actual duration D2 is greater than or equal to the second duration d2. Other cases are similar, and are not described again herein.

It should be noted that the mapping relationships described above are merely examples, and all minimum durations of a corresponding padding field that are set based on different rules fall within the protection scope of this application. Both adjusting a plurality of parameters (for example, the bandwidth, the NSS, and the MCS) in parallel and performing refined classification setting of the minimum duration of the padding field can reduce the delay as much as possible.

S302: The access point device sends the radio frame to a station device.

S303: The station device switches to the first bandwidth based on the radio frame.

Specifically, after receiving the control field from the access point device, the station device starts to perform bandwidth switching, and switches to the first bandwidth within the minimum duration of the padding field based on the first bandwidth indicated by the control field.

In embodiments of this application, in consideration of a lock delay of a phase-locked loop during bandwidth adjustment, different minimum durations of the padding field are set for different first bandwidths, so that the station device can complete bandwidth switching within the minimum duration of the padding field, thereby ensuring successful bandwidth switching. In addition, an unnecessary switching delay generated in a dynamic capability configuration process or a dynamic power save process due to setting of a uniform delay can be avoided, thereby improving communication efficiency.

It may be understood that in the foregoing method embodiments, a method or an operation implemented by the station device may alternatively be implemented by a component (for example, a chip or a circuit) that may be used in the station device, and a method and an operation implemented by the access point device may alternatively be implemented by a component (for example, a chip or a circuit) that may be used in the access point device.

In embodiments of this application, the station device or the access point device may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division corresponding to each function.

The foregoing describes in detail the method provided in embodiments of this application with reference to FIG. 3. The following describes in detail a communication apparatus provided in embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 6 is a diagram of a structure of a communication apparatus according to an embodiment of this application. The communication apparatus may include a receiving module 601, a processing module 602, and a sending module 603.

The communication apparatus may implement steps or procedures corresponding to those performed by the access point device in the foregoing method embodiments. For example, the communication apparatus may be an access point device, or a chip or a circuit configured in an access point device. The receiving module 601 and the sending module 603 are configured to perform receiving and sending related operations on an access point device side in the foregoing method embodiments. The processing module 602 is configured to perform processing related operations of the access point device in the foregoing method embodiments.

The processing module 602 is configured to generate a radio frame. The radio frame includes a control field and a padding field. The padding field follows the control field, and the control field indicates a first bandwidth. The first bandwidth is a bandwidth of the radio frame, and a minimum duration of the padding field is determined based on the first bandwidth.

The sending module 603 is configured to send the radio frame to a station device.

Optionally, when the first bandwidth is less than or equal to a second bandwidth, the minimum duration of the padding field is a first duration. Alternatively, when the first bandwidth is greater than the second bandwidth, the minimum duration of the padding field is a second duration.

Optionally, when the first bandwidth is less than or equal to a second bandwidth, the minimum duration of the padding field is 0. Alternatively, when the first bandwidth is greater than the second bandwidth, the minimum duration of the padding field is a third duration.

Optionally, the minimum duration of the padding field corresponds to one or more first bandwidths.

Optionally, the minimum duration of the padding field is determined based on at least two of the first bandwidth, and a number of spatial streams NSS and a modulation and coding scheme MCS that are used by the station device.

Optionally, the receiving module 601 is configured to receive capability information sent by the station device. The capability information indicates the minimum duration of the padding field.

Optionally, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

Optionally, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

Optionally, the second bandwidth is an initial bandwidth used by the station device.

Optionally, the first bandwidth is a bandwidth determined based on channel contention.

Optionally, the radio frame further includes a frame check field. The frame check field follows the padding field, or the frame check field is located before the padding field and after the control field.

Optionally, the radio frame is an initial frame or an initial control frame.

It should be noted that, for implementation of each module, refer to the corresponding description of the method embodiments shown in FIG. 3. Each module performs the method and the function performed by the access point device in the foregoing embodiments.

FIG. 7 is a diagram of a structure of another communication apparatus according to an embodiment of this application. The communication apparatus may include a receiving module 701, a processing module 702, and a sending module 703.

The communication apparatus may implement steps or procedures corresponding to those performed by the station device in the foregoing method embodiments. For example, the communication apparatus may be a station device, or a chip or a circuit configured in a station device. The receiving module 701 and the sending module 703 are configured to perform receiving and sending related operations on a station device side in the foregoing method embodiments. The processing module 702 is configured to perform processing related operations of the station device in the foregoing method embodiments.

The receiving module 701 is configured to receive a radio frame send by an access point device. The radio frame includes a control field and a padding field. The padding field follows the control field, and the control field indicates a first bandwidth. The first bandwidth is a bandwidth of the radio frame, and a minimum duration of the padding field is determined based on the first bandwidth.

The processing module 702 is configured to switch to the first bandwidth based on the radio frame.

Optionally, when the first bandwidth is less than or equal to a second bandwidth, the minimum duration of the padding field is a first duration. Alternatively, when the first bandwidth is greater than the second bandwidth, the minimum duration of the padding field is a second duration.

Optionally, when the first bandwidth is less than or equal to a second bandwidth, the minimum duration of the padding field is 0. Alternatively, when the first bandwidth is greater than the second bandwidth, the minimum duration of the padding field is a third duration.

Optionally, the minimum duration of the padding field corresponds to one or more first bandwidths.

Optionally, the minimum duration of the padding field is determined based on at least two of the first bandwidth, and a number of spatial streams NSS and a modulation and coding scheme MCS that are used by the station device.

Optionally, the apparatus further includes:
the sending module 703, configured to send capability information to the access point device, where the capability information indicates the minimum duration of the padding field.

Optionally, the capability information includes at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

Optionally, the capability information includes the first duration and the second duration. The first duration is the minimum duration of the padding field used when the first bandwidth is less than or equal to the second bandwidth. The second duration is the minimum duration of the padding field used when the first bandwidth is greater than the second bandwidth.

Alternatively, the capability information includes the third duration. The third duration is the minimum duration of the padding field used when the first bandwidth is greater than the second bandwidth.

Alternatively, the capability information includes a plurality of minimum durations of the padding field. One minimum duration corresponds to one or more first bandwidths.

Alternatively, the capability information includes a plurality of minimum durations of the padding field. One minimum duration corresponds to at least two of the first bandwidth, and the NSS and the MCS that are used by the station device.

Optionally, the second bandwidth is an initial bandwidth used by the station device.

Optionally, the first bandwidth is a bandwidth determined based on channel contention.

Optionally, the processing module 702 is further configured to switch to the first bandwidth within the minimum duration of the padding field.

Optionally, the radio frame further includes a frame check field. The frame check field follows the padding field, or the frame check field is located before the padding field and after the control field.

Optionally, the radio frame is an initial frame or an initial control frame.

It should be noted that, for implementation of each module, refer to the corresponding description of the method embodiments shown in FIG. 3. Each module performs the method and the function performed by the station device in the foregoing embodiments.

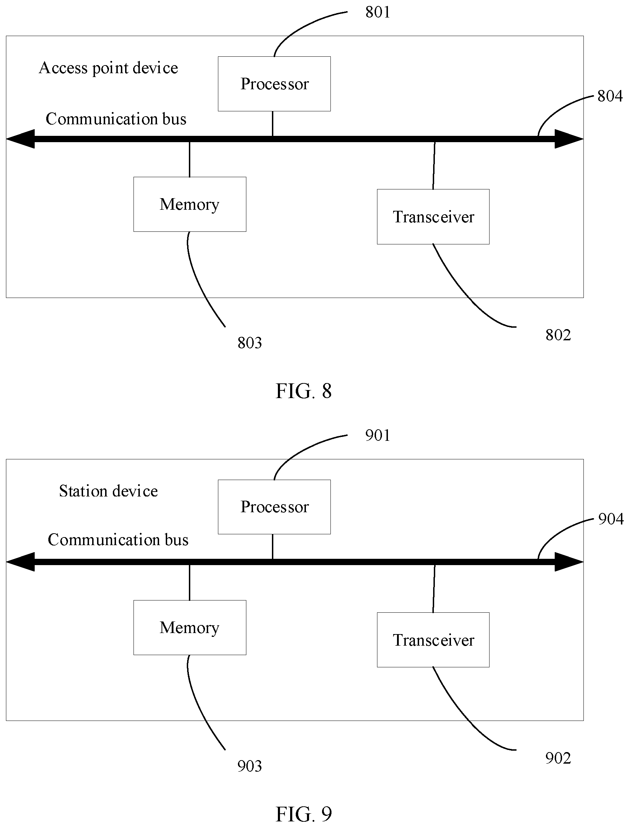

FIG. 8 is a diagram of a structure of an access point device according to an embodiment of this application. The access point device may be used in the system shown in FIG. 1, to perform functions of the access point device in the foregoing method embodiments, or implement steps or procedures performed by the access point device in the foregoing method embodiments.

As shown in FIG. 8, the access point device includes a processor 801 and a transceiver 802. Optionally, the access point device further includes a memory 803. The processor 801, the transceiver 802, and the memory 803 may communicate with each other through an internal connection path, to transfer a control signal and/or a data signal. The memory 803 is configured to store a computer program. The processor 801 is configured to invoke the computer program from the memory 803 and run the computer program, to control the transceiver 802 to receive/send a signal. Optionally, the access point device may further include an antenna, and the antenna is configured to send, via a radio signal, uplink data or uplink control signaling output by the transceiver 802.

The processor 801 and the memory 803 may be integrated into one processing apparatus. The processor 801 is configured to execute program code stored in the memory 803 to implement the foregoing functions. During specific implementation, the memory 803 may alternatively be integrated into the processor 801, or may be independent of the processor 801. The processor 801 may correspond to the processing module in FIG. 6.

The transceiver 802 may correspond to the receiving module and the sending module in FIG. 6, and may also be referred to as a transceiver unit or a transceiver module. The transceiver 802 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that the access point device shown in FIG. 8 can implement processes related to the access point device in the method embodiment shown in FIG. 3. Operations and/or functions of modules in the access point device are separately intended to implement corresponding procedures in the foregoing method embodiments. For details, refer to the descriptions in the foregoing method embodiments. To avoid repetition, detailed descriptions are properly omitted herein.

The processor 801 may be configured to perform actions that are implemented inside the access point device and that are described in the foregoing method embodiments. The transceiver 802 may be configured to perform actions that are sent by the access point device to the station device or received from the station device and that are described in the foregoing method embodiments. For details, refer to the descriptions in the foregoing method embodiments. Details are not described herein again.

The processor 801 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor 801 may be a combination that implements a computing function, for example, a combination that includes one or more microprocessors, or a combination of a digital signal processor and a microprocessor. A communication bus 804 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 8, but this does not mean that there is only one bus or only one type of bus. The communication bus 804 is configured to implement communication connection between these components. The transceiver 802 in this embodiment of this application is configured to perform signaling or data communication with another node device. The memory 803 may include a volatile memory, for example, a non-volatile dynamic random access memory (non-volatile dynamic random access memory, NVDRAM), a phase change random access memory (phase change RAM, PRAM), or a magnetoresistive random access memory (magnetoresistive RAM, MRAM), and may further include a non-volatile memory, for example, at least one magnetic disk storage component, an electrically erasable programmable read-only memory (electrically erasable programmable read-only memory, EEPROM), flash memory component such as an NOR flash memory (NOR flash memory) or an NAND flash memory (NAND flash memory), or a semiconductor component such as a solid state drive (solid state drive, SSD). Optionally, the memory 803 may alternatively be at least one storage apparatus away from the processor 801. Optionally, the memory 803 may further store a group of computer program code or configuration information. Optionally, the processor 801 may further execute the program stored in the memory 803. The processor may cooperate with the memory and the transceiver to perform any method and function of the access point device in the foregoing embodiments of this application.

FIG. 9 is a diagram of a structure of a station device according to an embodiment of this application. The station device may be used in the system shown in FIG. 1, to perform functions of the station device in the foregoing method embodiments, or implement steps or procedures performed by the station device in the foregoing method embodiments.

As shown in FIG. 9, the station device includes a processor 901 and a transceiver 902. Optionally, the station device further includes a memory 903. The processor 901, the transceiver 902, and the memory 903 may communicate with each other through an internal connection path, to transfer a control signal and/or a data signal. The memory 903 is configured to store a computer program. The processor 901 is configured to invoke the computer program from the memory 903 and run the computer program, to control the transceiver 902 to receive/send a signal. Optionally, the station device may further include an antenna, and the antenna is configured to send, via a radio signal, uplink data or uplink control signaling output by the transceiver 902.

The processor 901 and the memory 903 may be integrated into one processing apparatus. The processor 901 is configured to execute program code stored in the memory 903 to implement the foregoing functions. During specific implementation, the memory 903 may alternatively be integrated into the processor 901, or may be independent of the processor 901. The processor 901 may correspond to the processing module in FIG. 7.

The transceiver 902 may correspond to the receiving module and the sending module in FIG. 7, and may also be referred to as a transceiver unit or a transceiver module. The transceiver 902 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It should be understood that the station device shown in FIG. 9 can implement processes related to the station device in the method embodiment shown in FIG. 3. Operations and/or functions of modules in the station device are respectively intended to implement the corresponding procedures in the foregoing method embodiments. For details, refer to the descriptions in the foregoing method embodiments. To avoid repetition, detailed descriptions are properly omitted herein.

The processor 901 may be configured to perform actions that are implemented inside the station device and that are described in the foregoing method embodiments, and the transceiver 902 may be configured to perform actions that are sent by the station device to the access point device or received from the access point device and that are described in the foregoing method embodiments. For details, refer to the descriptions in the foregoing method embodiments. Details are not described herein again.

The processor 901 may be processors of various types that are mentioned above. The communication bus 904 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 9, but this does not mean that there is only one bus or only one type of bus. The communication bus 904 is configured to implement communication connection between these components. The transceiver 902 in the device in this embodiment of this application is configured to perform signaling or data communication with another device. The memory 903 may be memories of various types that are mentioned above. Optionally, the memory 903 may alternatively be at least one storage apparatus away from the processor 901. The memory 903 stores a group of computer program code or configuration information, and the processor 901 executes the program in the memory 903. The processor may cooperate with the memory and the transceiver to perform any method and function of the station device in the foregoing embodiments of this application.

An embodiment of this application further provides a chip system. The chip system includes a processor, configured to support a station device or an access point device in implementing a function in any one of the foregoing embodiments, for example, generating or processing the radio frame in the foregoing method.

In a possible design, the chip system may further include a memory. The memory is configured to store a computer program and data that are necessary for the station device or the access point device. The chip system may include a chip, or may include a chip and another discrete component. Input and output of the chip system respectively correspond to a receiving operation and a sending operation of the station device or the access point device in the method embodiment.

According to the method provided in embodiments of this application, this application further provides a computer program product. The computer program product includes a computer program. When the computer program runs on a computer, the computer is enabled to perform the method in any one of the embodiments shown in FIG. 3.

According to the method provided in embodiments of this application, this application further provides a computer-readable medium. The computer-readable medium stores a computer program. When the computer program runs on a computer, the computer is enabled to perform the method in any one of the embodiments shown in FIG. 3.

According to the method provided in embodiments of this application, this application further provides a communication system. The communication system includes one or more station devices and one or more access point devices described above.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating a radio frame, wherein the radio frame comprises a control field and a padding field, the padding field follows the control field, the control field indicates a first bandwidth, the first bandwidth is a bandwidth of the radio frame, and a minimum duration of the padding field is determined based on the first bandwidth; and
sending the radio frame to a station device.

2. The method according to claim 1, wherein when the first bandwidth is less than or equal to a second bandwidth, the minimum duration of the padding field is a first duration; or when the first bandwidth is greater than the second bandwidth, the minimum duration of the padding field is a second duration.

3. The method according to claim 1, wherein when the first bandwidth is less than or equal to a second bandwidth, the minimum duration of the padding field is 0; or when the first bandwidth is greater than the second bandwidth, the minimum duration of the padding field is a third duration.

4. The method according to claim 1, wherein the minimum duration of the padding field corresponds to one or more first bandwidths.

5. The method according to claim 1, wherein the minimum duration of the padding field is determined based on at least two of the first bandwidth, and a number of spatial streams NSS and a modulation and coding scheme MCS that are used by the station device.

6. The method according to any one of claims 1 to 5, wherein the method further comprises:
receiving capability information sent by the station device, wherein the capability information indicates the minimum duration of the padding field.

7. The method according to claim 6, wherein the capability information comprises at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

8. The method according to claim 6 or 7, wherein
the capability information comprises the first duration and the second duration, the first duration is the minimum duration of the padding field used when the first bandwidth is less than or equal to the second bandwidth, and the second duration is the minimum duration of the padding field used when the first bandwidth is greater than the second bandwidth; or
the capability information comprises the third duration, and the third duration is the minimum duration of the padding field used when the first bandwidth is greater than the second bandwidth; or
the capability information comprises a plurality of minimum durations of the padding field, and one minimum duration corresponds to one or more first bandwidths; or
the capability information comprises a plurality of minimum durations of the padding field, and one minimum duration corresponds to at least two of the first bandwidth, and the NSS and the MCS that are used by the station device.

9. The method according to claim 2, 3, 7, or 8, wherein the second bandwidth is an initial bandwidth used by the station device.

10. The method according to any one of claims 1 to 9, wherein the first bandwidth is a bandwidth determined based on channel contention.

11. The method according to any one of claims 1 to 10, wherein the radio frame further comprises a frame check field, and the frame check field follows the padding field, or the frame check field is located before the padding field and after the control field.

12. The method according to any one of claims 1 to 11, wherein the radio frame is an initial frame or an initial control frame.

13. A communication method, wherein the method comprises:
receiving a radio frame send by an access point device, wherein the radio frame comprises a control field and a padding field, the padding field follows the control field, the control field indicates a first bandwidth, the first bandwidth is a bandwidth of the radio frame, and a minimum duration of the padding field is determined based on the first bandwidth; and
switching to the first bandwidth based on the radio frame.

14. The method according to claim 13, wherein when the first bandwidth is less than or equal to a second bandwidth, the minimum duration of the padding field is a first duration; or when the first bandwidth is greater than the second bandwidth, the minimum duration of the padding field is a second duration.

15. The method according to claim 13, wherein when the first bandwidth is less than or equal to the second bandwidth, the minimum duration of the padding field is 0; or when the first bandwidth is greater than the second bandwidth, the minimum duration of the padding field is a third duration.

16. The method according to claim 13, wherein the minimum duration of the padding field corresponds to one or more first bandwidths.

17. The method according to claim 13, wherein the minimum duration of the padding field is determined based on at least two of the first bandwidth, and a number of spatial streams NSS and a modulation and coding scheme MCS that are used by a station device.

18. The method according to any one of claims 13 to 17, wherein the method further comprises:
sending capability information to the access point device, wherein the capability information indicates the minimum duration of the padding field.

19. The method according to claim 18, wherein the capability information comprises at least one of the following information: a mapping relationship between a magnitude relationship between the first bandwidth and the second bandwidth and the minimum duration of the padding field; a mapping relationship between the first bandwidth and the minimum duration of the padding field; and a mapping relationship between at least two of the first bandwidth, and the NSS and the MCS that are used by the station device, and the minimum duration of the padding field.

20. The method according to claim 18 or 19, wherein
the capability information comprises the first duration and the second duration, the first duration is the minimum duration of the padding field used when the first bandwidth is less than or equal to the second bandwidth, and the second duration is the minimum duration of the padding field used when the first bandwidth is greater than the second bandwidth; or
the capability information comprises the third duration, and the third duration is the minimum duration of the padding field used when the first bandwidth is greater than the second bandwidth; or
the capability information comprises a plurality of minimum durations of the padding field, and one minimum duration corresponds to one or more first bandwidths; or
the capability information comprises a plurality of minimum durations of the padding field, and one minimum duration corresponds to at least two of the first bandwidth, and the NSS and the MCS that are used by the station device.

21. The method according to claim 14, 15, 19, or 20, wherein the second bandwidth is an initial bandwidth used by the station device.

22. The method according to any one of claims 13 to 21, wherein the first bandwidth is a bandwidth determined based on channel contention.

23. The method according to any one of claims 13 to 22, wherein the switching to the first bandwidth based on the radio frame comprises:
switching to the first bandwidth within the minimum duration of the padding field.

24. The method according to any one of claims 13 to 23, wherein the radio frame further comprises a frame check field, and the frame check field follows the padding field, or the frame check field is located before the padding field and after the control field.

25. The method according to any one of claims 13 to 24, wherein the radio frame is an initial frame or an initial control frame.

26. A communication apparatus, comprising a memory and a processor, wherein the memory is configured to store a computer program, and the processor runs the computer program to enable the communication apparatus to perform the method according to any one of claims 1 to 12.

27. A communication apparatus, comprising a memory and a processor, wherein the memory is configured to store a computer program, and the processor runs the computer program to enable the communication apparatus to perform the method according to any one of claims 13 to 25.

28. A computer-readable storage medium, wherein the computer-readable storage medium comprises a computer program, and when the computer program is run by a processor, the method according to any one of claims 1 to 25 is implemented.

29. A chip, wherein the chip comprises a processor and a communication interface, the communication interface is configured to communicate with an external component or an internal component, and the processor is configured to implement the method according to any one of claims 1 to 25.
